# EUROPEAN PATENT APPLICATION

(11) **EP 1 994 870 A2**
(43) Date of publication of application: **26.11.2008**
(21) Application number: 08101478.9
(22) Date of filing: 11.02.2008
(51) Int. Cl.: A47L 9/24, A47L 9/10, A47L 9/16

(54) **Cyclone dust-separating unit for use in vacuum cleaner**

(30) Priority: 21.05.2007 KR 20070049343
(71) Applicant: Samsung Gwangju Electronics Co., Ltd., Gwangju-city (KR)
(72) Inventor: Han, Jung-gyun, Gwangsan-gu Gwangju-City (KR); Oh, Jang-Keun, Seo-gu Gwangju-City (KR); Jung, Il-du, Gwangsan-gu Gwangju-city (KR)
(74) Representative: Blot, Philippe Robert Emile

(57) **Abstract**

A cyclone dust-separating unit is provided that includes a whirling current generating unit to rotate air drawn in through a suction nozzle, and a dust collecting bin having opened and closed ends to collect and store dust separated by a whirling current. The generating unit and the bin are separate tube members, and the generating unit includes a cyclone body having a first end with an air inlet and a second end with an air outlet, a spiral guide member on the first end to guide air flowed in through the air inlet in a spiral shape, an outflow pipe on the second end to extend to the outside of the cyclone body while penetrating through the air outlet, and a dust guide to connect a dust discharging opening with the opened end and to guide dust or dirt discharged through the dust discharging opening, to the opened end.

## Description

### BACKGROUND OF THE INVENTION

### 1. Field of the Invention

The present disclosure relates to a vacuum cleaner. More particularly, the present disclosure relates to a cyclone dust-separating unit for use in a vacuum cleaner, which separates and collects dust or dirt from air drawn in through a suction nozzle in cleaning.

### 2. Description of the Related Art

In general, a vacuum cleaner generates a strong suction force by using a suction motor, and thus draws in dust or dirt adhered to a surface to be cleaned to clean the surface to be cleaned. Such a vacuum cleaner is usually provided with a dust collecting unit having a dust bag or a cyclone, a dust bin and a filter to separate and collect the dust or dirt from the drawn-in air. Accordingly, the air laden with the dust or dirt drawn in by the suction force of the suction motor loses the dust or dirt therefrom while passing through the dust collecting unit and then discharges to the outside.

However, in the conventional vacuum cleaner, if the dust or dirt is somewhat accumulated in the dust bag or the filter of the dust collecting unit after the cleaning operations are repeatedly carried out, the suction force of the suction motor is deteriorated and thus a dust-separating efficiency of the vacuum cleaner is lowered. Particularly, if the dust bag is filled with the dust or dirt or the filter is choked with the dust or dirt, the suction motor may be overloaded, so that a lifespan thereof is reduced. Accordingly, a user should frequently carry out troublesome operations that she or he separates the dust bag or the dust bin and the filter from the cleaner body and then replaces the dust bag with a new one or cleans the dust bin and the filter.

To address the problem as described above, in recent, a vacuum cleaner in which a cyclone dust-separating unit is installed on a connecting tube connecting a suction nozzle and a cleaner body to accessorily collect and remove dust or dirt has been proposed and used. Examples of the vacuum cleaner to which the cyclone dust-separating unit is applied as described above are disclosed in Korean Utility model Application No. 20-1993-4891 (a vacuum cleaner having a cyclone), Korean Patent Application No. 10-1993-5099 (a vacuum cleaner), and Korean Patent Application No. 10-1999-20704 (a vacuum cleaner having a cyclone dust-separating unit).

However, each of the cyclone dust-separating units of the vacuum cleaners as described above is configured, so that a whirling current generating unit and a dust collecting bin are not separately formed from each other, but formed of a single cylinder. Accordingly, each of the cyclone dust-separating units are disadvantageous in that a dust-collecting efficiency is low, a re-scattering of the dust or dirt is severe, and a construction is so complicated that it is inconvenient to dump the collected dust or dirt from the dust collecting bin.

### SUMMARY OF THE INVENTION

An aspect of the present disclosure is to address at least the above problems and/or disadvantages and to provide at least the advantages described below. Accordingly, an aspect of the present disclosure is to provide a cyclone dust-separating unit for use in a vacuum cleaner capable of improving a dust-separating efficiency and more surely preventing dust or dirt from being re-scattered while having a relatively simple structure.

Another aspect of the present disclosure is to provide a cyclone dust-separating unit for use in a vacuum cleaner capable of easily separating a whirling current generating unit and a dust collecting bin, thereby allowing the cyclone dust-separating unit to easily fabricate, maintain and repair, as well as to easily dump dust or dirt collected therein.

In accordance with an aspect of the present disclosure, a cyclone dust-separating unit for use in a vacuum cleaner includes a whirling current generating unit to rotate air drawn in through a suction nozzle, and a dust collecting bin having an opened end and a closed end and to collect and store dust or dirt centrifugally separated by a whirling current generated by the whirling current generating unit. The whirling current generating unit and the dust collecting bin are formed of separate tube members, and the whirling current generating unit includes a cyclone body having a first end having an air inlet formed thereto and a second end having an air outlet formed thereto, a spiral guide member disposed on the part of the first end of the cyclone body in the cyclone body to guide air flowed in through the air inlet in a spiral shape, an outflow pipe disposed on the part of the second end of the cyclone body in the cyclone body to extend to the outside of the cyclone body while penetrating through the air outlet, and a dust guide to connect a dust discharging opening formed in one side of the second end of the cyclone body with the opened end of the dust collecting bin and to guide dust or dirt discharged through the dust discharging opening, to the opened end of the dust collecting bin.

Here, the whirling current generating unit may be detachably disposed between the suction nozzle and a cleaner body, more preferably, on one of between the suction nozzle and an extended tube, between the extended tube and an operating handle, and a suction hose and the cleaner body. For this, preferably, but not necessarily, the cyclone body includes first and second locking parts disposed to the first end and the outflow pipe to detachably lock the cyclone body to the suction nozzle and the extended tube, the extended tube and the operating handle, or the suction hose and the cleaner body, respectively.

Alternatively, the whirling current generating unit may be integrally formed with one of the suction nozzle, an extended tube, an operating handle and a suction hose. Also, the whirling current generating unit and the dust collecting bin may be disposed to separate and collect the dust or dirt in one of the suction nozzle and a cleaner body.

Preferably, but not necessarily, the cyclone body of the whirling current generating unit and the dust collecting bin are formed of a cylindrical tube and a cylindrical tub, respectively, and are disposed to parallel to each other.

Preferably, but not necessarily, the cyclone body of the whirling current generating unit has a longitudinal length equal to or smaller than that of the dust collecting bin.

Preferably, but not necessarily, at least one of the cyclone body of the whirling current generating unit and the dust collecting bin is formed of a transparent plastic material.

Also, the first end having the air inlet may be formed of a separate suction tube detachably joined to the cyclone body. In this case, preferably, but not necessarily, the separate suction tube is joined with the cyclone body by screw means.

The outflow pipe may be detachably joined with the air outlet of the cyclone body. At this time, preferably, but not necessarily, the outflow pipe is joined with the air outlet by screw means.

The dust collecting bin at the opened end thereof may be detachably joined with the dust guide. At this time, preferably, but not necessarily, the opened end of the dust collecting bin is joined with the dust guide by screw means.

### BRIEF DESCRIPTION OF THE DRAWING FIGURES

The above and other objects, features, and advantages of certain exemplary embodiments of the present disclosure will be more apparent from the following description taken in conjunction with the accompanying drawings, in which:
FIG. 1 is a assembled cross-sectional view exemplifying a cyclone dust-separating unit for use in a vacuum cleaner according to an exemplary embodiment of the present disclosure;
FIG. 2 is an exploded cross-sectional view of the cyclone dust-separating unit illustrated in FIG. 1;
FIG. 3 is a perspective view exemplifying a vacuum cleaner to which the cyclone dust-separating unit illustrated in FIG. 1 is applied;
FIG. 4 is a perspective view exemplifying a suction nozzle to which the cyclone dust-separating unit illustrated in FIG. 1 is integrally joined;
FIGS. 5A and 5B are a top plan cross-sectional view and a side cross-sectional view exemplifying a cleaner body of a vacuum cleaner in which the cyclone dust-separating unit illustrated in FIG. 1 is installed; and
FIG. 6 is a partial top plan cross-sectional view exemplifying a suction nozzle of a vacuum cleaner in which the cyclone dust-separating unit illustrated in FIG. 1 is installed.

Throughout the drawings, the same reference numerals will be understood to refer to the same elements, features, and structures.

### DETAILED DESCRIPTION OF THE EXEMPLARY EMBODIMENTS

Hereinafter, a cyclone dust-separating unit for use in a vacuum cleaner according to exemplary embodiments of the present disclosure will be described in detail with reference to the accompanying drawing figures.

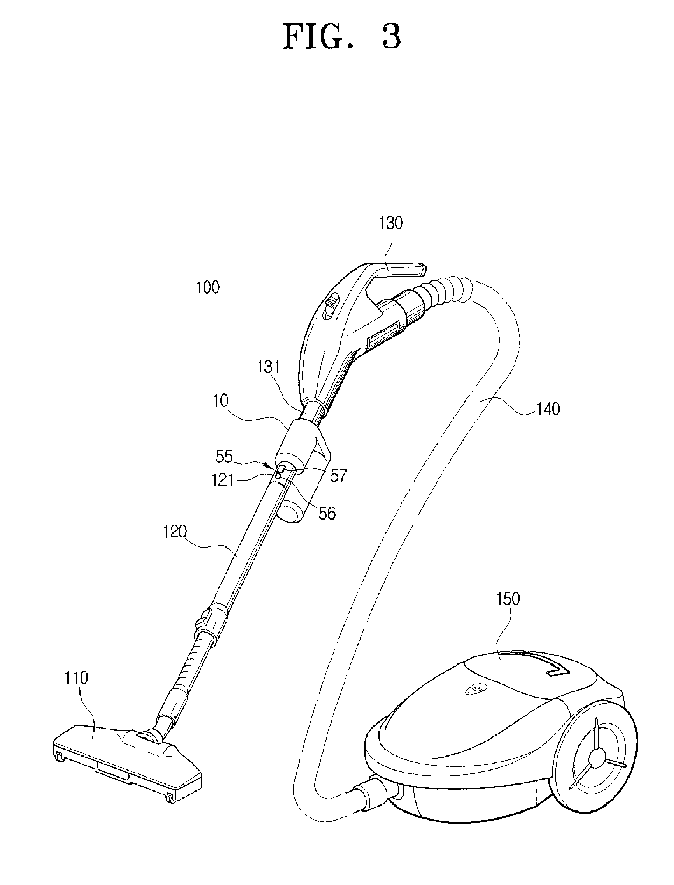

FIG. 3 is a view exemplifying an example of a vacuum cleaner 100 to which a cyclone dust-separating unit 10 according to an exemplary embodiment of the present disclosure is applied.

Referring to FIG. 3, the vacuum cleaner 100 includes a suction nozzle 110 to draw in air laden with dust or dirt, a telescopic extended tube 120 connected to the suction nozzle 110, an operating handle 130, a cyclone dust-separating unit 10 disposed between the operating handle 130 and the extended tube 120, a suction hose 140 connected to the operating handle 130, and a cleaner body 150 connected to the suction hose 140 and divided into a dust-separating chamber (not illustrated) and a motor chamber (not illustrated).

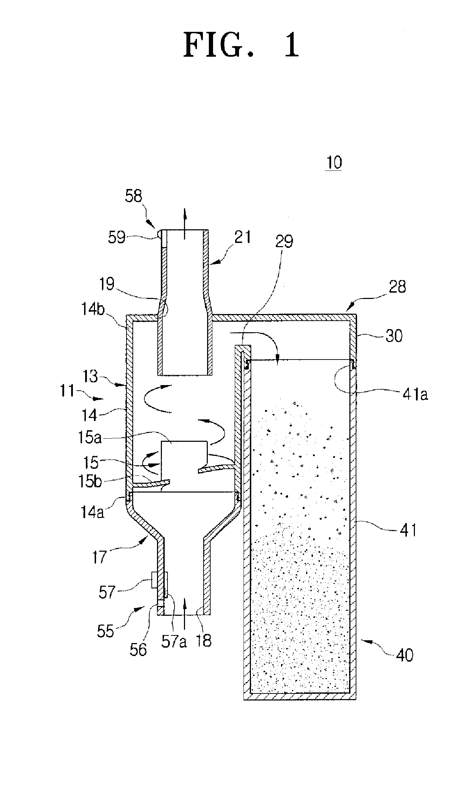

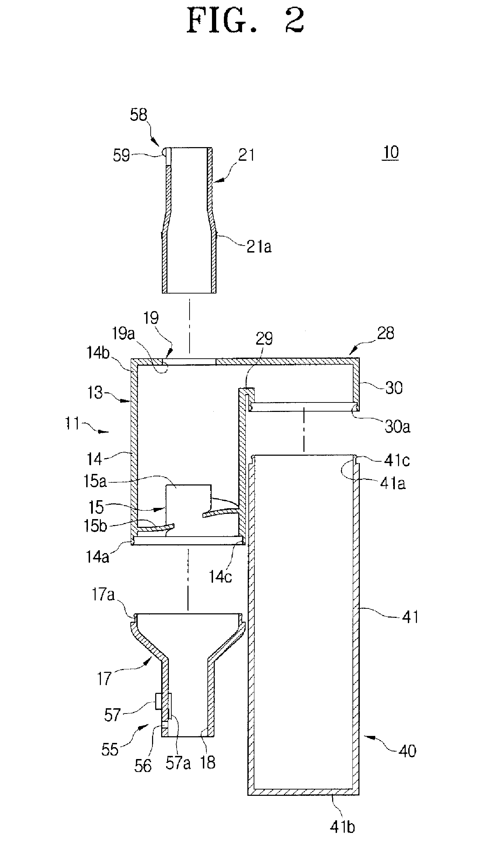

FIGS. 1 and 2 are an assembled cross-sectional view and an exploded cross-sectional view, respectively, exemplifying the cyclone dust-separating unit 10 according to the exemplary embodiment of the present disclosure.

As illustrated in FIGS. 1, 2 and 3, the cyclone dust-separating unit 10 is detachably installed between the extended tube 120 and the operating handle 130, and includes a whirling current generating unit 11 and a dust collecting bin 40.

The whirling current generating unit 11 is connected between the extended tube 120 and the operating handle 130, and rotates air drawn in through the suction nozzle 110 thus to centrifugally separate the dust or dirt from the drawn-in air. The whirling current generating unit 11 includes a cyclone body 13, a guide member 15, an outflow pipe 21, and a dust guide 28.

The cyclone body 13 is made up of a cylindrical tube 14. The cylindrical tube 14 is formed of a transparent plastic material, so that a user can easily perceive whether it is choked or blocked with the dust or dirt or the like. The cylindrical tube 14 at a lower end 14a thereof is screwedly joined with a suction tube 17 in which an air inlet 18 is formed. For this, a female screw groove 14c (see FIG. 2) is formed in the lower end 14a, and a male screw groove 17a (see FIG. 2) is formed on a corresponding end of the suction tube 17.

The guide member 15, which guides the air flowed in through the air inlet 18 of the suction tube 17, is disposed above the female screw groove 14c of lower end 14a in the cylindrical tube 14. The guide member 15 is provided with a cylindrical member 15a and a spiral blade 15b, so that it guides the air drawn into the cylindrical tube 14 to form a whirling current whirling in a spiral shape.

The cylindrical tube 14 at an upper end 14b thereof has an air outlet 19 through which an outflow pipe 21 to be described later is joined while penetrating. The air outlet 19 has a female screw groove 19a formed at an inner circumferential surface thereof.

The outflow pipe 21 is disposed on the part of the upper end 14a of the cylindrical tube 14, and extended to the outside of the cylindrical tube 14 while penetrating through the air outlet 19. The outflow pipe 21 guides the air whirling in the spiral shape by the guide member 15 to rotate in a spiral shape along an outer circumferential surface thereof and thus to centrifugally separate the dust or dirt from the air, and at the same time, guides the air in the cylindrical tube 14 to discharge toward the operating handle 130. The outflow pipe 21 has a male screw groove 21 a formed at an outer circumferential surface of a lower end thereof corresponding to the air outlet 19 to engage with the female screw groove 19a of the air outlet 19, so that it can be connected with or separated from the air outlet 19.

A dust discharging opening 29 is formed on one side of the upper end 14b of the cylindrical tube 14 to face the dust guide 28.

The dust guide 28 guides the dust or dirt discharged through the dust discharging opening 29 by the centrifugal force into a cylindrical tub 41 of the dust collecting bin 40, which will be described. The dust guide 28 is made up of a sleeve 30 integrally formed with the cylindrical tube 14, so that one side thereof is communicated with the dust discharging opening 29 and a lower end thereof is communicated with an opened end 41 a of the cylindrical tub 41. The sleeve 30 has a female screw groove 30a formed at an inner circumferential surface of the lower end thereof.

The dust collecting bin 40 collects and stores the dust or dirt discharged along the dust guide 28 through the dust discharging opening 29. The dust collecting bin 40 is made up of a cylindrical tub 41 detachably joined to the lower end of the sleeve 30 of the dust guide 28. The cylindrical tub 41 is provided with an opened end 41 a and a closed end 41 b. The opened end 41 a has a male screw groove 41 c formed at an outer circumferential surface thereof to engage with the female screw groove 30a of the sleeve 30. Accordingly, when the opened end 41 a and the sleeve 30 are assembled with each other through the male screw groove 41 c and the female screw groove 30a, the cylindrical tub 41 is disposed parallel to the cylindrical tube 14.

Preferably, but not necessarily, the cylindrical tub 41 is formed of a transparent plastic material, so that the user can easily perceive whether it is filled with the dust or dirt. In addition, preferably, but not necessarily, to sufficiently secure a collecting and storing space for the dust or dirt and prevent the dust or dirt from flowing backward into the cylindrical tube 14, the cylindrical tub 41 has a longitudinal length equal to or larger than that of the cylindrical tube 14.

Referring to FIGS. 1 and 3, to detachably fix the cyclone dust-separating unit 10 between the extended tube 120 and the operating handle 130, first and second locking parts 55 and 58 are disposed to the suction tube 17 and the outflow pipe 21 of the cyclone dust-separating unit 10, respectively. At this time, a lower end of the suction tube 17 has a diameter larger than that of an upper end (not illustrated) of the extended tube 120 to accommodate the upper end of the extended tube 120, and an upper end of the outflow pipe 21 has a diameter smaller than that of a lower end 131 of the operating handle 130, so that it is inserted into the lower end 131 of the operating handle.

The first locking part 55 disposed to the suction tube 17 is made up of a first fixing groove or hole 56, and a first button 57. The first fixing hole 56 accommodates a first corresponding flexible protrusion 121 (see FIG. 3) of a first corresponding locking part (not illustrated) formed on the upper end of the extended tube 120. The first button 57 has a pushing portion 57a to elastically push down the first corresponding flexible protrusion 121 inserted in the first fixing hole 56 thus to easily come out of the first fixing hole 56 when the first locking part 55 is separated from the first corresponding locking part.

The second locking part 58 disposed to the outflow pipe 21 is made up of a second flexible protrusion 59. When the second locking part 58 is coupled with a second corresponding locking part (not illustrated) disposed to the lower end 131 of the operating handle 130, the second fixing protrusion 59 is inserted into a second fixing or hole (not illustrated) of the second corresponding locking part. When the second locking part 58 is separated from the second corresponding locking part, the second flexible protrusion 59 is pushed down by a second button (not illustrated) of the second corresponding locking part, so that it escapes from the second fixing hole.

In the above description, although the cyclone dust-separating unit 10 is explained and illustrated as detachably installed between the extended tube 120 and the operating handle 130 by the first and the second locking parts 55 and 58 and the first and the second corresponding locking parts, the present disclosure is not limited thereto. For instance, the cyclone dust-separating unit 10 can be detachably installed between the suction nozzle 110 and the extended tube 120, or between the suction hose 140 and the cleaner body 150 by first and second locking parts 55 and 58 and first and second corresponding locking parts having the same constructions.

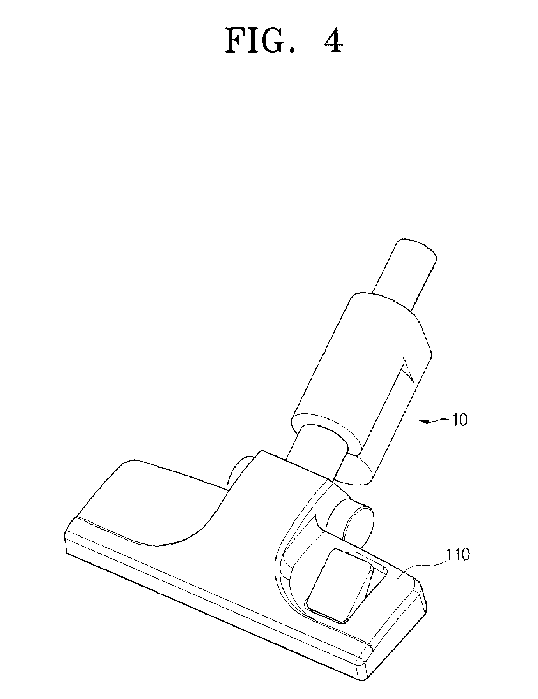

In addition, instead of being detachably installed among the suction nozzle 110, the extended tube 120, the operating handle 130, and the cleaner body 150, the cyclone dust-separating unit 10 can be integrally formed with the suction nozzle 110 (see FIG. 4), the extended tube 120, the operating handle 130, or the suction hose 140. In this case, only a single locking part 55 or 58 corresponding to a corresponding locking part to be connected is formed.

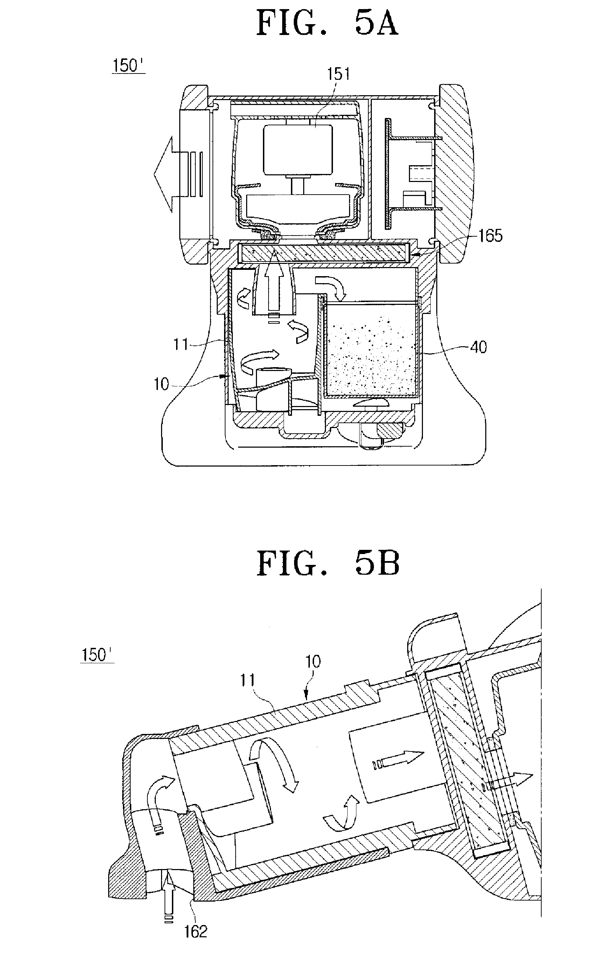

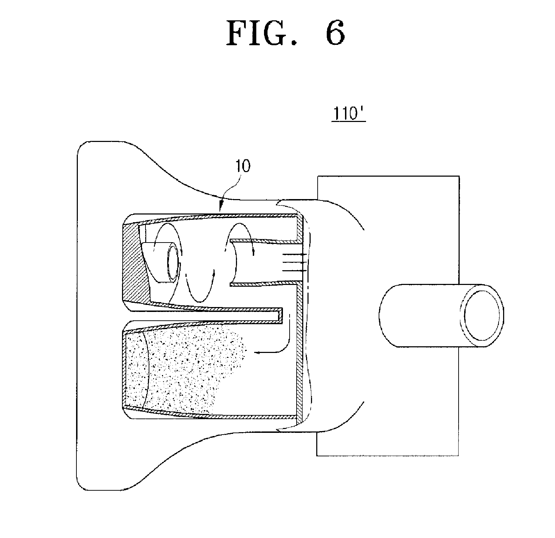

Also, as illustrated in FIGS. 5A through 6, the whirling current generating unit 11 and the dust collecting bin 40 of the cyclone dust-separating unit 10 according to the present disclosure may be installed in a cleaner body 150' (see FIGS. 5A and 5B) having a filter 165 and a suction motor 151, or a suction nozzle 110' (see FIG. 6) in the same construction and principle.

As descried above, the cyclone dust-separating unit 10 according to the present disclosure is configured, so that four parts, that is, the suction tube 17, the cyclone body 13, the outflow pipe 21, and the dust collecting bin 40 are joined with or separated from one another, as illustrated in FIG. 2. Accordingly, the cyclone dust-separating unit 10 is easy to fabricate because if only the four parts are assembled, a fabrication thereof is completed. Also, the cyclone dust-separating unit 10 is convenient to maintain and repair because if the whirling current generating unit 11 is choked or blocked with the dust or dirt or the like, it can easily remove the dust or dirt or the like by separating the suction tube 17 and the outflow pipe 21 from the cyclone body 13 and if the dust collecting bin 40 is filled with the dust or dirt, it can easily be separated from the dust guide 28 to dump the dust or dirt.

Hereinafter, an operation of the cyclone dust-separating unit 10 according to the exemplary embodiment of the present disclosure constructed as described above will be explained in detail with reference to FIGS. 1 through 3.

If the vacuum cleaner is supplied with the power and at the same time, the suction nozzle 110 is moved along a surface to be cleaned, air laden with dust or dirt is drawn into the cyclone body 13 through an air suction opening (not illustrated) of the suction nozzle 110, the extended tube 120, and the suction tube 17. The drawn-in air forms a whirling current through the guide member 15 and the outflow pipe 21. As a result, relatively large dust or dirt included in the drawn-in air is discharged through the dust discharging opening 29 due to the centrifugal force, and then collected and stored in the dust collecting bin 40 via the dust guide 28.

And, the dust-removed air passes through the outflow pipe 21 and flows into the cleaner body 150 through the operating handle 130 and the suction hose 140. The air flowed into the cleaner body is moved into the dust collecting chamber to remove dust or dirt therefrom, and then discharged to the outside through the motor chamber.

After the cleaning operation is completed as described above, if the user wants to dump the dust or dirt collected and stored in the dust collection bin 40, she or he rotates the dust collection bin 40 in a direction that the male screw groove 41 c is disengaged from the female screw groove 30a. As a result, the dust collection bin 40 is separated from the dust guide 28. And then, the user dumps the dust or dirt from the dust collection bin 40. After that, to connect the dust collection bin 40 to the dust guide 28, the user rotates the dust collection bin 40 again in a direction that the male screw groove 41 c is engaged with the female screw groove 30a.

As apparent from the foregoing description, according to the exemplary embodiments of the present disclosure, the cyclone dust-separating unit for use in the vacuum cleaner is configured, so that the whirling current generating unit for centrifugally separating the dust or dirt includes the cylindrical tube, the spiral guide member, and the outflow pipe, and the dust collecting bin for collecting and storing the dust or dirt includes the cylindrical tub separately formed from the cylindrical tube. Accordingly, the cyclone dust-separating unit according to the exemplary embodiments of the present disclosure can improve the dust-separating efficiency and more surely prevent the dust or dirt from being re-scattered while having the relatively simple structure.

Further, the cyclone dust-separating unit for use in the vacuum cleaner according to the exemplary embodiments of the present disclosure is configured, so that the suction tube, the cyclone body, the outflow pipe and the dust collecting bin can be joined with or separated from one another. Accordingly, the cyclone dust-separating unit according to the exemplary embodiments of the present disclosure is easy to fabricate because if only the four parts are assembled, the fabrication thereof is completed. Also, the cyclone dust-separating unit according to the exemplary embodiments of the present disclosure is convenient to maintain and repair because if the whirling current generating unit is choked with the dust or dirt or the like, it can easily remove the dust or dirt or the like by separating the suction tube and the outflow pipe from the cyclone body and if the dust collecting bin is filled with the dust or dirt, it can easily dump the dust or dirt by being separated from the dust guide.

Also, the cyclone dust-separating unit for use in the vacuum cleaner according to the exemplary embodiments of the present disclosure is configured, so that the cyclone body and/or the dust collecting bin is formed of the transparent plastic material. Accordingly, the user can easily perceive whether the cyclone body is choked with the dust or dirt or the like or whether the dust collecting bin is in a state where the dust or dirt should be dumped, and thereby remove the dust or dirt with which may cause the cyclone body to choke or with which may cause the dust collecting bin to overflow, at a proper time. Thus, the choking of the cyclone body by the dust or dirt or the like and/or the deterioration in the dust-separating efficiency by the re-scattering of the dust or dirt collected in the dust collecting bin can be prevented.

Although representative exemplary embodiments of the present disclosure have been shown and described in order to exemplify the principle of the present disclosure, the present disclosure is not limited to the specific embodiments. It will be understood that various modifications and changes can be made by one skilled in the art without departing from the spirit and scope of the disclosure as defined by the appended claims. Therefore, it shall be considered that such modifications, changes and equivalents thereof are all included within the scope of the present disclosure.

## Claims

1. A cyclone dust-separating unit for use in a vacuum cleaner, comprising:
a whirling current generating unit to rotate air drawn in through a suction nozzle; and
a dust collecting bin having an opened end and a closed end, the dust collecting bin being configured to collect and store dust or dirt centrifugally separated by a whirling current generated by the whirling current generating unit,
wherein the whirling current generating unit and the dust collecting bin are formed of separate tube members,
wherein the whirling current generating unit comprises a cyclone body having a first end having an air inlet formed thereto and a second end having an air outlet formed thereto, a spiral guide member disposed on a part of the first end of the cyclone body in the cyclone body to guide air flowed in through the air inlet in a spiral shape, an outflow pipe disposed on a part of the second end of the cyclone body in the cyclone body to extend to the outside of the cyclone body while penetrating through the air outlet, and a dust guide to connect a dust discharging opening formed in one side of the second end of the cyclone body with the opened end of the dust collecting bin and to guide dust or dirt discharged through the dust discharging opening to the opened end of the dust collecting bin.

2. The cyclone dust-separating unit as claimed in claim 1, wherein the whirling current generating unit is disposable between the suction nozzle and a cleaner body.

3. The cyclone dust-separating unit as claimed in claim 2, wherein the whirling current generating unit is detachably disposable in a location selected from the group consisting of between the suction nozzle and an extended tube, between the extended tube and an operating handle, and between a suction hose and the cleaner body.

4. The cyclone dust-separating unit as claimed in claim 3, wherein the cyclone body comprises first and second locking parts configured to detachably lock the cyclone body to the suction nozzle and the extended tube, the extended tube and the operating handle, or the suction hose and the cleaner body, respectively.

5. The cyclone dust-separating unit as claimed in any of claims 1 to 4, wherein the whirling current generating unit is integrally formed with one of the suction nozzle, an extended tube, an operating handle, and a suction hose.

6. The cyclone dust-separating unit as claimed in any of claims 1 to 5, wherein the whirling current generating unit and the dust collecting bin are disposed so as to separate and collect the dust or dirt in one of the suction nozzle and a cleaner body.

7. The cyclone dust-separating unit as claimed in any of claims 1 to 6, wherein the cyclone body of the whirling current generating unit and the dust collecting bin are formed of a cylindrical tube and a cylindrical tub, respectively, and are disposed parallel to each other.

8. The cyclone dust-separating unit as claimed in any of claims 1 to 7, wherein the cyclone body of the whirling current generating unit has a longitudinal length equal to or smaller than that of the dust collecting bin.

9. The cyclone dust-separating unit as claimed in any of claims 1 to 8, wherein at least one of the cyclone body of the whirling current generating unit and the dust collecting bin is formed of a transparent plastic material.

10. The cyclone dust-separating unit as claimed in any of claims 1 to 9, wherein the first end having the air inlet is formed of a separate suction tube detachably joined to the cyclone body.

11. The cyclone dust-separating unit as claimed in claim 10, wherein the separate suction tube is joined with the cyclone body by a screw thread.

12. The cyclone dust-separating unit as claimed in any of claims 1 to 11, wherein the outflow pipe is detachably joined with the air outlet of the cyclone body.

13. The cyclone dust-separating unit as claimed in any of claims 1 to 12, wherein the outflow pipe is joined with the air outlet by screw means.

14. The cyclone dust-separating unit as claimed in any of claims 1 to 13, wherein the dust collecting bin at the opened end thereof is detachably joined with the dust guide.

15. The cyclone dust-separating unit as claimed in any of claims 1 to 14, wherein the opened end of the dust collecting bin is joined with the dust guide by a screw thread.
